# FASCICULE DE BREVET EUROPEEN

(11) **EP 0 547 956 B1**
(45) Date de publication et mention de la délivrance du brevet: **11.10.1995**
(21) Numéro de dépôt: 92403394.7
(22) Date de dépôt: 14.12.1992
(51) Int. Cl.: H01S 3/06, H01S 3/094, H01S 3/16

(54) **Mini cavité laser pompée optiquement, son procédé de fabrication et laser utilisant cette cavité**
Optisch gepumpter Miniatur-Laser Resonator, Verfahren zur Herstellung und Laser mit einem solchen Resonator
Optically pumped mini-laser resonator, method of its fabrication and laser utilizing this resonator

(30) Priorité: 16.12.1991 FR 9115590
(43) Date de publication de la demande: 23.06.1993
(73) Titulaire: COMMISSARIAT A L'ENERGIE ATOMIQUE, 75015 Paris (FR)
(72) Inventeur: Chambaz, Bernard, F-38180 Seyssins (FR); Chartier, Isabelle, F-38000 Grenoble (FR); Ferrand, Bernard, F-38340 Voreppe (FR); Pelenc, Denis, F-38600 Fontaine (FR)
(74) Mandataire: Signore, Robert

(56) Documents cités:
- SIEMENS RESEARCH AND DEVELOPMENT REPORTS vol. 5, no. 5, Mai 1976, pages 287 -295;G.WINZER ET AL. 'MINIATURE NEODYMIUM LASER (MNL) AS POSSIBLE TRANSMITTERS FOR FIBER-OPTIC COMMUNICATIONS SYSTEMS'
- PATENT ABSTRACTS OF JAPAN vol. 7, no. 140 (E-182)(1285) 18 Juin 1983 & JP-A-58 054 690

## Description

La présente invention se rapporte à une mini cavité laser à cristal, pompée optiquement et plus précisément à une mini cavité laser utilisant des couches minces monocristallines. L'invention se rapporte aussi à la fabrication de cette mini cavité.

Elle trouve une application dans le domaine des micro-lasers utilisés en particulier en optique intégrée, dans les télécommunications par fibres optiques, en médecine (microchirurgie, traitement de la peau) et pour l'étude des semi-conducteurs.

En particulier, l'invention s'applique à des micro-lasers pompés optiquement par diode laser.

L'émetteur laser ou cristal amplificateur est constitué, de façon connue dans les diodes lasers, par une ou plusieurs couches monocristallines déposées sur un substrat mono-cristallin approprié. Suivant le type d'application envisagé, l'épaisseur de ces couches varie de quelques micromètres à quelques centaines de micromètres.

L'épitaxie en phase liquide est l'une des techniques la plus utilisée pour réaliser ces couches monocristallines.

L'effet laser est obtenu par l'introduction dans les couches épitaxiées d'ions actifs ou activateurs lasers, dont la concentration est fixée en fonction du mode de pompage choisi (transverse ou longitudinal) et en fonction de la tolérance de ces ions par le réseau cristallin des couches épitaxiées.

Dans le cas d'un émetteur laser à structure guide d'onde, une des couches de l'émetteur doit présenter un indice de réfraction supérieur à celui des matériaux immédiatement voisins (couche ou substrat) et constituer ainsi une couche guidante assurant le guidage des ondes lumineuses émises par l'émetteur.

L'indice de réfraction de la couche guidante est ajusté par l'introduction d'ions appropriés et son épaisseur est adaptée au mode de guidage choisi (mono-mode ou multi-mode).

Dans les lasers à couches minces monocristallines, on trouve des lasers à semiconducteurs à base de matériau III-V comme décrits dans le document FR-A-2 581 262 et des lasers à isolants électriques notamment à oxydes métalliques. Les lasers à semi-conducteurs peuvent être pompes optiquement ou électriquement alors que les lasers à isolants électriques ne peuvent être pompés qu'optiquement.

Des lasers à cristal d'oxyde sont en particulier décrits dans les documents suivants :
- "Miniature néodymium lasers (MNL) as possible transmitters for fiber-optic communication systems. Part 1 ; Stoichiometric materials" de G. Winzer et al., p. 287-295 (document 1) et "Part. 2 ; YAG : Nd³⁺ waveguide lasers" de P. Möckel et al., p. 296-302 (document 2), parus dans Siemens Forsch. - u. Entwickl. - Ber. Bd. 5 (1976) Nr. 5 ;
- "Single-transverse-mode LiNdP₄O₁₂ slab waveguide laser" de K. Kubodera et K. Otsuka, p. 653-659, J. Appl. Phys. 50 (2), de février 1979 (document 3) ;
- "Glass waveguide laser" de H. Aoki et al., "IEEE photonics technology letters." vol. 2, n°7, juillet 1990, p. 459-460 (document 4) ;
- "A flashlamp-pumped YAG : Nd³⁺ waveguide laser" de P. Möckel et al., "Journal of Appl. Phys.", vol. 45, n°8, Août 1974, p. 3460-3462 (document 5) ;
- "A slab waveguide laser formed of glass-clad LiNdP₄O₁₂", de K. Kubodera et al., J. Appl. Phys. 49 (1), Janvier 1978, p. 65-68 (document 6).

Les émetteurs lasers à couches minces sont fabriqués en épitaxiant différentes couches monocristallines sur un substrat monocristallin, puis en prélevant des échantillons parallélépipédiques de quelques millimètres de côté dans l'ensemble substrat-couches qui constitueront la partie active de la cavité laser.

Pour les matériaux III-V, ces échantillons sont obtenus par simple clivage de l'ensemble substrat-couches alors que pour les oxydes, ces échantillons sont obtenus par découpe de l'ensemble substrat-couches selon des directions perpendiculaires aux couches puis par polissage des faces découpées.

Les faces latérales de l'échantillon obtenues par clivage (cas des matériaux III-V) ou par découpe puis polissage (cas des oxydes) constituent les faces d'entrée et de sortie de la lumière stimulée. Aussi, ces faces doivent être parfaitement bien définies.

En outre, les caractéristiques de la cavité laser vont dépendre de la nature et du positionnement des miroirs semi-réfléchissants, destinés à l'amplification de la lumière émise par la couche active, et du mode de pompage de la cavité.

Dans le cas d'une cavité interne, c'est-à-dire compacte, monolithique et rigide, les miroirs semi-réfléchissants sont accolés aux faces latérales de l'échantillon obtenues par clivage ou par découpe.

La définition des faces latérales obtenues par clivage ne pose pas de problème. Il n'en est pas de même pour les faces obtenues par découpe de l'ensemble substrat-couches.

L'invention s'applique aux cavités lasers à cristal notamment d'oxyde obtenu par découpe d'un ensemble substrat-couches épitaxiées. Les lasers utilisant les cristaux d'oxyde sont actuellement les plus fabriqués et les plus utilisés.

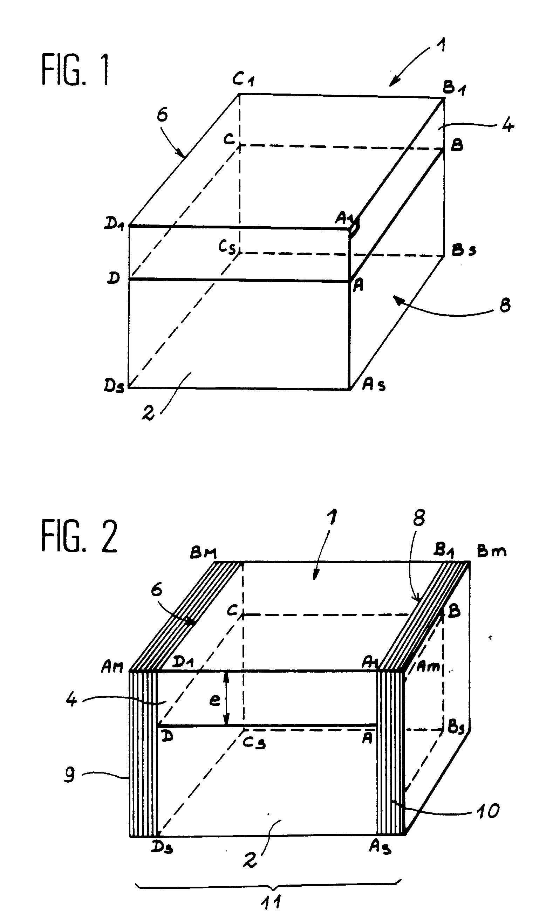

Dans une structure guide d'onde, l'émetteur est constitué, comme représenté schématiquement, en perspective, sur la figure 1, d'un substrat d'oxyde monocristallin 2 et d'une couche active et guidante 4 d'oxyde. L'émetteur porte la référence générale 1. Les faces notées A₁B₁BₛAₛ et C₁D₁DₛCₛ sont les faces obtenues par découpe et polissage de l'ensemble substrat-couche active 2-4.

Les faces ABB₁A₁ et DCC₁D₁ de la couche active 4 constituent les faces actives de l'émetteur. Elles doivent présenter un certain nombre de qualités et tout d'abord être rigoureusement perpendiculaires à la face A₁B₁C₁D₁ de l'émetteur. En outre, elles doivent présenter un polissage parfait afin de diminuer les pertes optiques.

Par ailleurs, les arêtes A₁B₁ et D₁C₁ doivent être vives et les plus régulières possible, sans dentelures, ces dernières introduisant des pertes de lumière par diffraction dans la cavité laser.

Actuellement, l'obtention de ces arêtes A₁B₁ et C₁D₁ vives est un point critique des émetteurs lasers à matériau non clivables et il est quasiment impossible de les obtenir rectilignes et sans dentelures. Ceci apparaît clairement dans l'article 5 de Möckel cité précédemment.

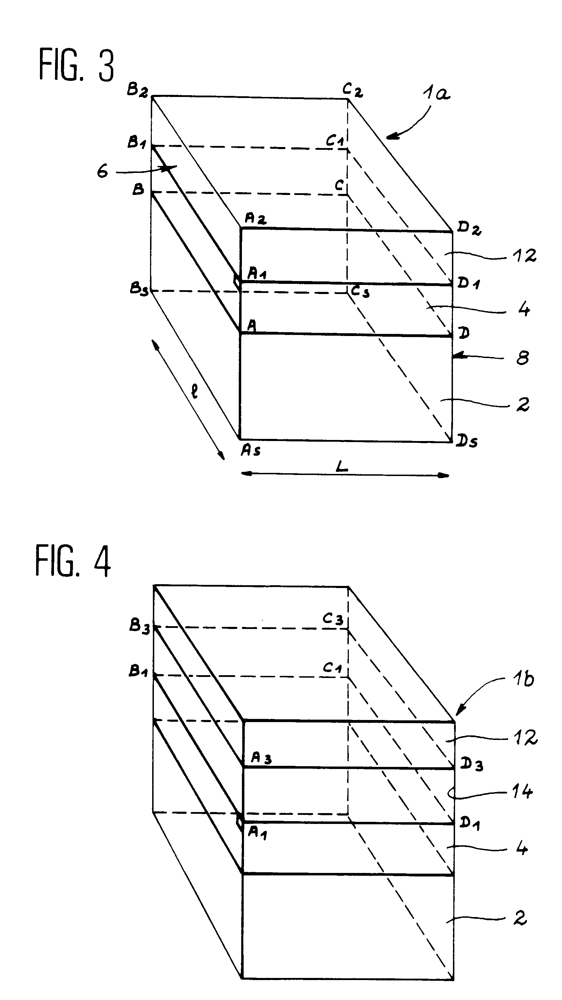

Par ailleurs, les faces 6 et 8, c'est-à-dire A₁B₁BₛAₛ et D₁C₁CₛDₛ de l'émetteur 1 peuvent, comme représenté schématiquement, en perspective, sur la figure 2, être recouvertes respectivement d'un miroir 9 et 10 semi-réfléchissant, obtenu par dépôt de plusieurs couches diélectriques appropriées. La cavité laser interne obtenue porte la référence générale 11.

Ces dépôts 9 et 10 doivent être les plus homogènes possible en regard des faces actives A₁B₁BA et D₁C₁CD de l'émetteur 1.

Compte tenu de l'épaisseur e de la couche active 4, quelques micromètres à quelques centaines de micromètres, on constate que toutes ces exigences ne peuvent être satisfaites totalement.

De plus, lors du dépôt des miroirs diélectriques multicouches 9 et 10, c'est toute la zone A₁B₁BₘAₘ et toute la zone C₁D₁A_{M}B_{M} de la cavité laser qui sont perturbées. Des phénomènes de diffusion et de diffraction des ondes lumineuses vont notamment intervenir dans la zone A₁B₁BₘAₘ et la zone C₁D₁A_{M}B_{M}, dus aux effets de bord et augmenter ainsi les pertes optiques du guide de lumière 4.

Des amélioration de la cavité laser ont été envisagées dans les documents 3 et 6 de K. Kubodera cités précédemment pour limiter ces pertes optiques. Ces améliorations consistaient à déposer une couche de verre sur la couche guide de la cavité laser en LiNdP₄O₁₂, supportée par un substrat de verre, avant de découper l'échantillon, puis à polir les faces obtenues par découpe de l'empilement des deux substrats de verre et du guide optique.

Ces substrats de verre sont rapportés sur la structure guide et créeent des pertes de lumière aux interfaces substrat de verre-couche guide. En outre, la structure obtenue est instable et du fait que la nature et la dureté des matériaux utilisés sont très différentes, le polissage des faces actives de la cavité laser est très difficile à réaliser et ne permet pas l'obtention de faces actives latérales rigoureusement planes.

L'invention a justement pour objet une nouvelle mini cavité laser pompée optiquement utilisant un cristal émetteur non clivable, permettant de remédier aux différents inconvénients mentionnés ci-dessus. L'invention concerne aussi un procédé de fabrication de cette mini cavité laser ainsi qu'un laser équipé de cette mini cavité.

Pour remédier aux inconvénients ci-dessus, l'invention propose de créer une arête vive sur les faces latérales de la cavité laser, différente de celle de la couche guide.

De façon plus précise, l'invention a pour objet une mini cavité laser pompée optiquement comportant un émetteur solide parallélépipédique, isolant électriquement et à structure guidante, pourvu de deux faces latérales parallèles polies, d'un substrat monocristallin et de plusieurs couches monocristallines épitaxiées sur le substrat et présentant dans des directions parallèles auxdites faces une dureté égale à celle du substrat, le substrat et les couches épitaxiées étant non clivables, une de ces couches constituant une couche guide apte à guider la lumière émise par l'émetteur et la lumière de pompage et présentant un indice de réfraction supérieur à celui des matériaux adjacents et une autre couche constituant une couche de protection non guidante, la couche de protection et le substrat constituant deux faces opposées de l'émetteur perpendiculaires auxdites faces latérales, des ions activateurs lasers étant contenus dans le substrat et/ou dans l'une des couches épitaxiées.

Ainsi, la couche guidante est entourée de deux matériaux de même nature, mais d'indice inférieur, ce qui symétrise le profil d'indice et améliore les performances du guide optique. De plus, la couche supplémentaire permet de rejeter hors de la zone active du laser l'arête vive de la cavité qui devient maintenant une arête non active.

En outre, la découpe et le polissage des faces latérales de l'émetteur solide présente une faculté accrue du fait que tous les matériaux sont de même nature et de même dureté. Dans ces conditions, l'arête externe de la couche guidante, n'étant plus une arête vive, se trouve protégée et peut ainsi être obtenue avec une qualité quasi parfaite.

La cavité laser peut être une cavité externe équipée de deux miroirs, disposés de part et d'autre de l'émetteur et à une certaine distance des faces latérales.

Cependant, dans le but de réduire l'encombrement de la cavité laser, chaque miroir semi-réfléchissant peut être disposé sur une des faces latérales de l'émetteur. Ces miroirs peuvent être simplement collés ou bien être déposés. Dans ce dernier cas, ces miroirs sont constitués en particulier de dépôts de matériaux diélectriques multicouches.

L'amélioration des faces latérales et en particulier des faces actives de la couche guide de la cavité laser permet d'améliorer les performances des miroirs semi-réfléchissants, en particulier lorsque ces derniers se présentent sous forme de diélectriques multicouches déposés.

Les ions activateurs peuvent être contenus dans le substrat ou dans l'une des couches, cette dernière constituant alors une couche active, voire même à la fois dans le substrat et dans l'une des couches épitaxiées.

De préférence, les ions activateurs sont présents dans une des couches épitaxiées, celle-ci pouvant être notamment la couche de protection.

De plus, la cavité laser peut comporter une couche guide distincte de la couche active. Dans ce cas, la couche guide peut être épitaxiée sur le substrat ou sur la couche active, cette dernière étant alors épitaxiée sur le substrat.

De préférence, la couche guide et la couche active constituent une seule et même couche.

En outre, il est possible d'interposer, entre le substrat et la couche guide ou entre le substrat et la couche active, suivant les positions respectives des couches épitaxiées, une couche tampon destinée à isoler la couche active ou la couche guide du substrat ; cette couche tampon doit être de même nature et de même dureté que le substrat et que les autres couches épitaxiées et doit aussi être formée par épitaxie.

De même, il est possible de prévoir une couche de confinement entre la couche guide et la couche supplémentaire de protection. Cette couche de confinement doit aussi être obtenue par épitaxie et présenter une dureté égale à celle des autres couches et être de même nature que ces dernières.

Pour des raisons de symétrie d'indice de réfraction, les couches tampon et de confinement sont réalisées avantageusement en un même matériau. De même, la couche de protection et le substrat sont réalisés de préférence en un même matériau. Il est toutefois possible d'utiliser des matériaux de compositions différentes pour le substrat et chacune des différentes couches.

En outre, de façon avantageuse, la couche active est réalisée dans le même matériau que le substrat et la couche de protection ou dans un matériau voisin dopé par les ions activateurs.

La cavité laser peut s'appliquer à tous les émetteurs lasers à base de matériaux non clivables comme les oxydes. En particulier, le substrat et les couches épitaxiées sont des oxydes mixtes métalliques et les ions activateurs lasers de ces oxydes sont des ions de terres rares et/ou des ions de métaux de transition.

En particulier, la cavité laser peut être réalisée dans des matériaux du type Y₃Al₅O₁₂ (ou YAG); Gd₃Ga₅O₁₂ (ou GGG) ; Gd₃Ga₅O₁₂ dans lequel une partie du gallium est substituée par du scandium (ou ScGGG) ou encore substituée par du magnésium et du zirconium (SGGG) ; LaMgAl₁₁O₁₉ (ou LMA) ; Y₂SiO₅ (ou YSO) ; YAl₃(BO₃)₄ (ou YAB).

Afin d'ajuster l'indice de réfraction de ces matériaux, il est possible de substituer tout ou partie de l'aluminium par du gallium et inversement tout ou partie du gallium par de l'aluminium.

Les ions actifs ou activateurs lasers sont en particulier des ions de néodyme, d'erbium, de thullium, de praséodyme, d'ytterbium ou encore des ions de chrome, de titane, de vanadium, etc.

L'invention a aussi pour objet un procédé de fabrication de la mini cavité laser définie précédemment. Ce procédé consiste à :
a) - épitaxier en phase liquide les couches monocristallines sur le substrat, avec en dernier lieu la couche de protection,
b) - découper dans l'ensemble obtenu en a) un parallélépipède dont les plans de coupe sont perpendiculaires aux couches et définissent les faces latérales et,
c) - polir lesdites faces latérales.

Afin d'améliorer encore la qualité de la cavité laser, un polissage mécanochimique de la surface de la couche guide, destinée à recevoir la couche de protection, peut être réalisé, avant l'épitaxie de cette couche de protection.

L'invention a aussi pour objet un mini laser à cristal pompé optiquement comportant une mini cavité laser telle que définie précédemment et des moyens de pompage optique de l'émetteur laser.

De façon avantageuse, les moyens de pompage consistent en une diode laser ou en une barrette de diodes lasers.

Afin de réduire au maximum l'encombrement du laser, cette diode ou cette barrette de diodes peut être accolée aux faces latérales de l'émetteur laser au niveau de la couche active. Bien entendu, cette disposition n'est pas obligatoire, et d'autres dispositions, comme celle décrite dans le document 1, peuvent être prévues.

L'utilisation de diodes lasers pour le pompage optique permet une miniaturisation des lasers solides du fait que ces dernières présentent des tailles beaucoup petites que celles des autres moyens de pompage lumineux classiquement utilisés tels que les lampes flash ou les lasers. En outre, les diodes lasers ont une très grande fiabilité et présentent des rendements lumineux très supérieurs à ceux des lampes flash.

D'autres caractéristiques et avantages de l'invention ressortiront mieux de la description qui va suivre, donnée à titre purement illustratif et non limitatif, en référence aux figures annexées, dans lesquelles :
- les figures 1 et 2, déjà décrites, représentent schématiquement, en perspective, un émetteur et une cavité laser, conformes à l'art antérieur ;
- les figures 3, 4 et 5 représentent schématiquement, en perspective, des cavités lasers conformes à l'invention : les figures 3 et 4 sont relatives à des cavités lasers externes et la figure 5 est relative à une cavité laser interne ; et
- la figure 6 représente schématiquement un microlaser conforme à l'invention, pompé optiquement par une diode laser.

L'invention se rapporte à tout matériau laser susceptible d'être obtenu sous forme de couches minces monocristallines par épitaxie en phase liquide sur un substrat monocristallin massif. Les couches monocristallines ont une structure identique ou proche de celle du substrat et une au moins de ces couches est une couche guidante. Le ou les ions actifs responsables de l'effet laser peuvent être situés dans au moins une des couches épitaxiées, y compris la couche guidante et la couche supplémentaire, et éventuellement dans le substrat.

Afin de simplifier la description qui va suivre, celle-ci sera faite dans le cadre du YAG, les ions activateurs lasers étant contenus dans une couche active distincte du substrat.

Les éléments identiques à ceux de l'art antérieur porteront la même référence.

L'émetteur laser représenté schématiquement en perspective sur la figure 3 porte la référence 1a. Il comporte un substrat 2 monocristallin en Y₃Al₅O₁₂ pur préparé à partir d'un lingot monocristallin obtenu par tirage Czockralski. Ce substrat 2 est une lame monocristalline orientée et polie. Il supporte une couche active 4 monocristalline épitaxiée aussi en Y₃Al₅O₁₂ mais dopé.

Dans ce type d'oxyde, l'un des dopants intéressants est le néodyme puisque, dans ce cas, la couche active 4 présentant l'effet laser devient aussi couche guidante. En effet, le dopage de Y₃Al₅O₁₂ par du néodyme augmente son indice de réfraction.

Le substrat 2 a une épaisseur de 500µm environ et la couche active 4 une épaisseur allant de 1µm à 150µm.

Conformément à l'invention, on trouve une couche 12 supplémentaire monocristalline en Y₃Al₅O₁₂ non dopée de 30 µm à 150µm d'épaisseur épitaxiée sur la couche active 4. Ainsi, le substrat 2, la couche active 4 et la couche de protection 12 se différencient uniquement par la nature du dopage de la couche 4 ; il présente donc une même dureté.

L'émetteur laser 1 de la figure 3 est obtenu par épitaxie en phase liquide des couches 4 et 12.

L'épitaxie en phase liquide est une technique bien connue pour la préparation de couches monocristallines de grenats magnétiques ou non. Elle est en particulier décrite dans le document EP-A-142 931. Elle permet la croissance des couches 4 et 12 par trempage du substrat monocristallin 2 dans une solution sursaturée faisant appel à un solvant.

Dans le cas présent, le bain d'épitaxie est constitué d'un mélange de différents oxydes. Le soluté, pour la couche active, est constitué de Y₂O₃, Al₂O₃ et de Nd₂O₃, et le solvant est un mélange de PbO et de B₂O₃.

Pour la croissance de la couche guide-active, on utilise par exemple les proportions suivantes, en mole % :
Y₂O₃ : 0,33
Nd₂O₃: 0,07
Al₂O₃ : 2,3
PbO : 89,9
B₂O₃ : 7,4.

La couche active ainsi obtenue a alors la formulation suivante Y₃₋ₓNdₓAl₅O₁₂ avec x valant 0,05.

Les oxydes utilisés pour la réalisation du bain sont disponibles commercialement et présentent une pureté de 99,999%. Ils sont mélangés et fondus dans un creuset en platine, dans l'air et à la pression ambiante.

La croissance de la couche dopée 4 a lieu à une température constante Td inférieure à la température de saturation Ts du bain par trempage du substrat 2 dans le bain. L'épaisseur de la couche dépend de la sursaturation dT=Ts-Td et du temps de trempe.

Après croissance de la couche active, qui sert aussi de couche guidante, on effectue un éventuel polissage mécanochimique de sa surface A₁B₁C₁D₁ puis on retrempe le substrat 2 revêtu de la couche active dans un nouveau bain d'épitaxie constitué d'Y₂O₃, d'Al₂O₃, de PbO₂ et de B₂O₃. Les proportions sont les mêmes que précédemment si ce n'est que la quantité d'Y₂O₃ est de 0,40 mole % et que la quantité de néodyme est nulle. La croissance de la couche de protection 12 en Y₃Al₅O₁₂ s'effectue dans les mêmes conditions que pour la couche active.

Lorsque les paramètres de maille cristalline de la couche 4 et du substrat 2 deviennent trop grands, ce qui est notamment le cas lorsque la concentration en néodyme augmente ou lorsque du gallium a été ajouté dans le bain d'épitaxie pour augmenter la différence d'indice entre couches, il est nécessaire d'ajuster les paramètres de maille en substituant par exemple un des éléments de la couche active par un autre élément. En particulier, on peut remplacer une partie de l'yttrium par du lutécium.

Dans ces conditions, la structure obtenue se présente sous la forme générale de :

Y₃Al₅O₁₂ / Y_{3-x-y}NdₓLu_{y}Ga_{z}Al_{5-z}O₁₂ / Y₃Al₅O₁₂

avec 0<x+y<3 où y est en particulier tel que 0<y≦1,5 et x est tel que 0<x≦0,3 et avec z tel que 0≦z≦0,5.

L'empilement de couches ainsi obtenu est ensuite découpé en petits échantillons de quelques millimètres de côté avec une scie multifils. Le parallélépipède obtenu présente une longueur L environ de 7mm et une largeur l environ de 5mm.

Les faces (A₂B₂BₛAₛ) 6 et (C₂D₂DₛCₛ) 8 qui constituent les plans de coupe de l'ensemble couches épitaxiées-substrat sont polies mécanochimiquement.

Le polissage de ces faces 6 et 8 peut être réalisé en assemblant plusieurs émetteurs la côte à côte, afin d'assurer un bon parallélisme de ces faces ainsi qu'une bonne perpendicularité par rapport à la surface A₂B₂C₂D₂ ou plan des couches.

Dans ces conditions, on obtient une arête vive A₂ B₂ et respectivement D₂C₂ de l'émetteur 1a. En outre, l'arête A₁B₁ de la couche guidante, et par voie de conséquence, l'arête C₁D₁ de cette même couche est parfaitement vive et protégée grâce à la couche de protection 12.

Grâce à l'utilisation de couches de nature identique ou proche de celle du substrat ainsi que grâce à la croissance épitaxiale en phase liquide, l'émetteur 1a de l'invention se comporte comme un monocristal. En particulier, les effets d'interface entre la couche active 4 et le substrat 2, plan ABCD de l'émetteur la, ainsi que les effets d'interface entre la couche de protection 12 et la couche active, correspondant au plan A₁B₁C₁D₁, sont inexistants contrairement aux structures de l'art antérieur utilisant des matériaux rapportés et de nature différente de celle de la couche guide.

Dans certains cas, le dopage de la couche active 4 peut ne pas être suffisant pour que l'indice de réfraction de cette couche 4 soit supérieure à celui des matériaux adjacents et puisse constituer la couche guide de l'émetteur laser. Dans ce cas, l'émetteur laser peut avoir la structure représentée sur la figure 4.

L'émetteur laser 1b représenté sur la figure 4 se distingue de celui représenté sur la figure 3 par l'interposition entre la couche active 4 et la couche supérieure de protection 12 d'une couche 14 jouant le rôle de couche guide alors que la couche 4 ne joue que le rôle de couche active.

Cette couche 14 a une épaisseur de 10µm environ, sa composition est proche de celle de la couche 4 et de celle de la couche 12 si ce n'est qu'elle renferme un ion dopant permettant une augmentation de son indice de façon à pouvoir guider la lumière émise par la couche 4.

Dans cette configuration, les arêtes A₃B₃ et C₃D₃ sont nettes et protégées par la couche 12.

La structure représentée sur la figure 4 peut être réalisée en particulier en Y₃Al₅O₁₂ avec une couche active en Y₃₋ₓNdₓAl₅O₁₂ et une couche guide en Y_{3-y}Lu_{y}Al_{5-z}Ga₃O₁₂ avec x, y et z ayant les mêmes valeurs que^{z}citées précédemment.

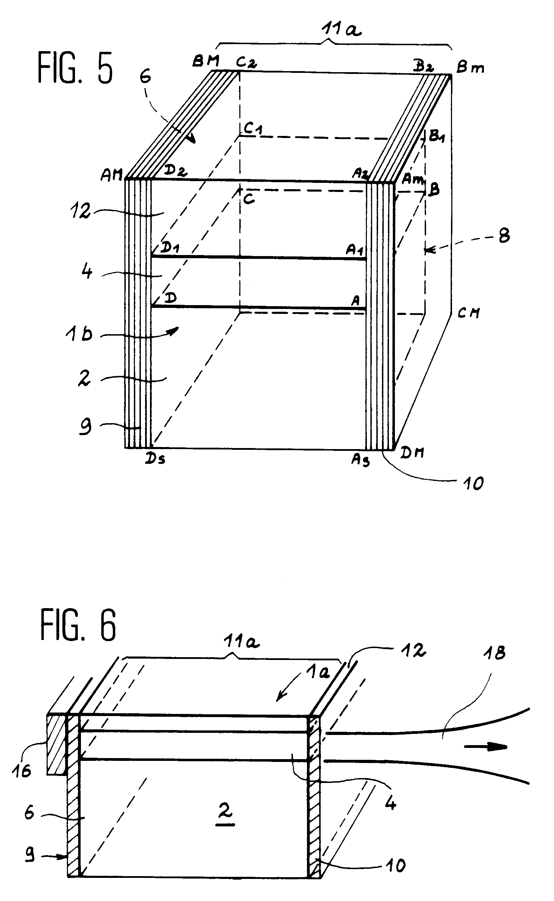

Afin de réaliser une cavité laser interne, il est possible, comme représenté sur la figure 5, de déposer sur les faces latérales 6 et 8 polies de l'émetteur 1A des miroirs 9 et 10 constitués d'un empilement de couches diélectriques. La cavité laser porte la référence générale 11a.

Ces miroirs doivent être semi-réfléchissants de façon à permettre à une partie de la lumière émise dans la couche active d'être réinjectée dans cette couche pour être amplifiée. Ils doivent présenter un coefficient de réflexion maximal pour la longueur d'onde émise par la couche 4. Le miroir d'entrée, par exemple 9, doit être transparent à la lumière destinée au pompage optique et le miroir de sortie, par exemple 10, doit être transparent à une partie de la lumière émise.

Le miroir d'entrée 9 et le miroir de sortie 10 de la cavité laser sont ceux classiquement utilisés.

La cavité laser conforme à l'invention peut bien entendu être utilisée dans un laser comme celui représenté schématiquement sur la figure 6. Ce laser est un microlaser équipé de la cavité 11a représentée sur la figure 5. Ce laser comprend en particulier une diode laser 16 disposée au niveau de la couche active 4. Cette diode 16 peut être collée sur le miroir d'entrée 9 de la cavité laser 11a à l'aide d'une colle optique. Le faisceau laser 18 amplifié dans la cavité 11a sort par le miroir 10.

Dans les conditions décrites précédemment, la cavité laser 11a est destinée à émettre un faisceau 18 de 10,6µm environ de longueur d'onde et la diode laser 16 peut être une diode émettant à 800nm.

Une cavité laser de structure décrite par la figure 3, dans laquelle la couche active 4 est constituée de Y_{2,95}Nd_{0,05}Al₅O₁₂ d'épaisseur 30µm et dont la couche de protection 12 est constituée de Y₃Al₅O₁₂ d'épaisseur 80µm , a été réalisée dans les conditions décrites ci-dessus. Elle permet l'obtention d'un effet laser en mode guidé (multimode) avec un seuil aussi faible que 0,6mW. Les pertes induites dans le guide étant inférieures à 0,05dB/cm sont beaucoup plus faibles que celles obtenues dans un guide classique tel que celui décrit par la figure 1 où elles atteignent une valeur de 1dB/cm. Les rendements lasers de cette cavité sont de l'ordre de 40% par rapport à la lumière incidente de pompage.

Lors de l'utilisation comme émetteur laser d'un oxyde dopé par des ions activateurs émettant dans une grande gamme de longueurs d'ondes (cas du chrome, ou de l'holmium), il est possible d'adjoindre un sélecteur de longueur d'onde. Dans ces conditions, le sélecteur sera interposé entre le miroir de sortie 10 et l'émetteur.

## Revendications

1. Mini cavité laser pompée optiquement comportant un émetteur solide (1a, 1b) parallélépipédique, isolant électriquement et à structure guidante, pourvu de deux faces latérales parallèles polies (6, 8), d'un substrat (2) monocristallin et de plusieurs couches (4, 12, 14) monocristallines épitaxiées sur le substrat et présentant dans des directions parallèles auxdites faces une dureté égale à celle du substrat, le substrat et les couches épitaxiées étant non clivables, une de ces couches constituant une couche guide (4, 14) apte à guider la lumière émise par l'émetteur et la lumière de pompage et présentant un indice de réfraction supérieur à celui des matériaux (2, 4, 12) adjacents et une autre couche (12) constituant une couche de protection non guidante, la couche de protection et le substrat constituant deux faces opposées de l'émetteur perpendiculaires auxdites faces latérales, des ions activateurs lasers étant contenus dans le substrat et/ou dans l'une des couches épitaxiées.

2. Mini cavité laser selon la revendication 1, caractérisée en ce que les ions activateurs lasers sont contenus dans l'une des couches épitaxiées, constituant ainsi une couche active (4).

3. Mini cavité laser selon la revendication 1, caractérisée en ce que la couche guide (4) et la couche active constituent une seule et même couche.

4. Mini cavité laser selon l'une quelconque des revendications 1 à 3, caractérisée en ce qu'un miroir semi-réfléchissant (9, 10) est disposé sur chacune des faces latérales (6, 8) de l'émetteur.

5. Mini cavité laser selon la revendication 4, caractérisée en ce que les deux miroirs (9, 10) sont constituer de dépôts de matériau effectués sur lesdites faces latérales.

6. Mini cavité laser selon la revendication 4 ou 5, caractérisée en ce que les miroirs (9, 10) sont constitués de dépôts de diélectriques multicouches.

7. Mini cavité laser selon l'une quelconque des revendications 1 à 6, caractérisée en ce que la couche supplémentaire (12) est de même nature que la couche active.

8. Mini cavité laser selon l'une quelconque des revendications 1 à 7, caractérisée en ce que le substrat (2) et les couches épitaxiées (4, 12, 14) sont des oxydes mixtes métalliques et en ce que les ions activateurs lasers sont des ions de terres rares et/ou de métaux de transition.

9. Mini cavité laser selon l'une quelconque des revendications 1 à 8, caractérisée en ce que le substrat (2) est un substrat choisi parmi Y₃Al₅O₁₂ ; Gd₃Ga₅O₁₂ ; Gd₃Ga₅O₁₂ avec une partie du gallium substitué par du scandium ou par du magnésium et du zirconium; LaMgAl₁₁O₁₉ ; Y₂SiO₅ ; YAl₃(BO₃)₄.

10. Mini cavité laser selon la revendication 9, caractérisée en ce que la couche supplémentaire (12) a la même composition que le substrat.

11. Mini cavité laser selon la revendication 1, caractérisée en ce que l'émetteur laser comprend un substrat en Y₃Al₅O₁₂ non dopé, une couche active en Y₃Al₅O₁₂ dopé aux ions néodyme jouant aussi le rôle de couche guide et une couche supplémentaire de Y₃Al₅O₁₂ non dopé.

12. Procédé de fabrication de la mini cavité laser selon la revendication 1, caractérisé en ce qu'il consiste à :
a) - épitaxier en phase liquide les couches monocristallines, sur le substrat, avec en dernier lieu la couche de protection,
b) - découper dans l'ensemble obtenu en a) un parallélépipède dont les plans de coupe (6, 7) sont perpendiculaires aux couches et définissent les faces latérales, et
c) - polir lesdites faces latérales.

13. Procédé selon la revendication 12, caractérisé en ce que l'on effectue un polissage de la surface de la couche épitaxiée destinée à recevoir la couche de protection.

14. Procédé selon la revendication 12 ou 13, caractérisé en ce que l'on effectue des dépôts de diélectriques (9, 10) sur lesdites faces latérales pour constituer les miroirs semi-réfléchissants.

15. Mini laser à cristal pompé optiquement, caractérisé en ce qu'il comprend une mini cavité laser (11a) selon l'une quelconque des revendications 1 à 11 et des moyens de pompage optique (16) de l'émetteur (1b).

16. Mini laser selon la revendication 15, caractérisé en ce que les moyens de pompage consistent en au moins une diode laser (16).

17. Mini laser selon la revendication 15 ou 16, caractérisé en ce que la diode est accolée sur l'une des faces latérales (6) au niveau de la couche active (4).

## Patentansprüche

1. Optisch gepumpter Miniatur-Laser-Resonator, umfassend einen parallelflachen Festkörper-Emitter (1a, 1b), elektrisch isolierend und mit leitender Struktur, versehen mit zwei polierten Seitenflächen (6, 8), einem monokristallinen Substrat (2) und mit mehreren monokristallinen, mittels Epitaxie auf dem Substrat abgeschiedenen Schichten (4, 12, 14), die in parallelen Richtungen zu den besagten Flächen eine Härte gleich der des Substrats aufweisen, wobei das Substrat und die Schichten nicht teil- bzw. spaltbar sind, eine dieser Schichten eine Leitschicht (4, 14) bildet, die das durch den Emitter emittierte Licht und das Pumplicht leiten kann und einen Brechungsindex aufweist, der größer ist als der der umgebenden Materialien (2, 4, 12), und eine weitere Schicht (12) eine nichtleitende Schutzschicht bildet, die Schutzschicht und das Substrat zwei entgegengesetzte Flächen des Emitters bilden, senkrecht zu den Seitenflächen, Laser-Aktivator-Ionen enthalten sind in dem Substrat und/oder in einer der epitaxierten Schichten.

2. Miniatur-Laser-Resonator nach Anspruch 1, dadurch gekennzeichnet, daß die Laser-Aktivator-Ionen enthalten sind in einer der Epitaxieschichten, die somit eine Aktivschicht (4) bildet.

3. Miniatur-Laser-Resonator nach Anspruch 1, dadurch gekennzeichnet, daß die Leitschicht (4) und die Aktivschicht ein und dieselbe Schicht bilden.

4. Miniatur-Laser-Resonator nach einem der Ansprüche 1 bis 3, dadurch gekennzeichnet, daß ein semi-reflektierender (9, 10) Spiegel auf jeder der Seitenflächen (6, 8) des Emitters angeordnet ist.

5. Miniatur-Laser-Resonator nach Anspruch 4, dadurch gekennzeichnet, daß die beiden Spiegel (9, 10) gebildet werden durch Materialabscheidungen auf den genannten Seitenflächen.

6. Miniatur-Laser-Resonator nach Anspruch 4 oder 5, dadurch gekennzeichnet, daß die Spiegel (9, 10) gebildet werden durch mehrlagige Dielektrikum-Abscheidungen.

7. Miniatur-Laser-Resonator nach einem der Ansprüche 1 bis 6, dadurch gekennzeichnet, daß die zusätzliche Schicht (12) gleich beschaffen ist wie die Aktivschicht.

8. Miniatur-Laser-Resonator nach einem der Ansprüche 1 bis 7, dadurch gekennzeichnet, daß das Substrat (2) und die Epitaxieschichten (4, 12, 14) gemischte metallische Oxide sind und daß die Laser-Aktivator-Ionen Ionen von seltenen Erden und/oder von übergangsmetallen sind.

9. Miniatur-Laser-Resonator nach einem der Ansprüche 1 bis 8, dadurch gekennzeichnet, daß das Substrat (2) ausgewählt wird unter Y₃Al₅O₁₂; Gd₃Ga₅O₁₂; Gd₃Ga₅O₁₂ mit einem Teil des Galliums ersetzt durch Scandium oder durch Magnesium und Zirkon; LaMgAl₁₁O₁₉; Y₂SiO₅; YAl₃(BO₃)₄.

10. Miniatur-Laser-Resonator nach Anspruch 9, dadurch gekennzeichnet, daß die zusätzliche Schicht (12) dieselbe Zusammensetzung wie das Substrat hat.

11. Miniatur-Laser-Resonator nach Anspruch 1, dadurch gekennzeichnet, daß der Laseremitter ein Substrat aus nichtdotiertem Y₃Al₅O₁₂ umfaßt, eine Aktivschicht aus mit Neodym-Ionen dotiertem Y₃Al₅O₁₂, die auch die Rolle der Leitschicht spielt, und eine zusätzliche Schicht aus nichtdotiertem Y₃Al₅O₁₂.

12. Verfahren zur Herstellung des Miniatur-Laser-Resonators nach Anspruch 1, dadurch gekennzeichnet, daß es aus folgenden Schritten besteht:
a) - Flüssigphasen-Epitaxieabscheidung der monokristallinen Schichten auf dem Substrat mit der Schutzschicht als letzter Schicht,
b) - Schneiden - aus dem erhaltenen Ganzen - eines Parallelflachs, dessen Schnittflächen (6, 7) senkrecht sind zu den Schichten und die Seitenflächen definieren, und
c) - Polieren der besagten Seitenflächen.

13. Verfahren nach Anspruch 12, dadurch gekennzeichnet, daß man ein Polieren der Oberfläche der epitaxierten Schicht durchführt, die die Schutzschicht erhalten soll.

14. Verfahren nach Anspruch 12 oder 13, dadurch gekennzeichnet, daß man Dielektrikum-Abscheidungen (9, 10) auf den genannten Seitenflächen vornimmt, um semi-reflektierende Spiegel zu bilden.

15. Optisch gepumpter Miniatur-Kristallaser, dadurch gekennzeichnet, daß er einen Miniatur-Laser-Resonator (11a) nach einem der Ansprüche 1 bis 11 umfaßt und optische Pumpeinrichtungen (16) des Emitters (1b).

16. Miniaturlaser nach Anspruch 15, dadurch gekennzeichnet, daß die Pumpeinrichtungen gebildet werden durch wenigstens eine Laser-Diode (16).

17. Miniaturlaser nach Anspruch 15 oder 16, dadurch gekennzeichnet, daß die Diode auf einer der Seitenflächen (6) in Höhe der Aktivschicht (4) angefügt ist.

## Claims

1. Optically pumped laser minicavity having a parallelepipedic solid emitter (1a, 1b), which is electrically insulating and has a guide structure, provided with two polished, parallel lateral faces (6, 8), a monocrystalline substrate (2) and several monocrystalline layers (4, 12, 14) epitaxied on the substrate and having in directions parallel to said faces a hardness equal to that of the substrate, the substrate and the epitaxied layers being non-cleavable, one of these layers constituting a guide layer (4, 14) able to guide the light emitted by the emitter and the pumping light and having a refraction index higher than that of the adjacent materials (2, 4, 12) and another layer (12) constituting a non-guiding protective layer, the protective layer and the substrate constituting two opposite faces of the emitter perpendicular to said lateral faces, laser activating ions being contained within the substrate and/or one of the epitaxied layers.

2. Laser minicavity according to claim 1, characterized in that the laser activating ions are contained in one of the epitaxied layers, thus constituting an active layer (4).

3. Laser minicavity according to claim 1, characterized in that the guide layer (4) and the active layer constitute the same layer.

4. Laser minicavity according to any one of the claims 1 to 3, characterized in that a semireflecting mirror (9, 10) is placed on each of the lateral faces (6, 8) of the emitter.

5. Laser minicavity according to claim 4, characterized in that the two mirrors (9, 10) are constituted by deposits of material made on said lateral faces.

6. Laser minicavity according to claim 4. characterized in that the mirrors (9, 10) are constituted by deposits of multilayer dielectrics.

7. Laser minicavity according to any one of the claims 1 to 6, characterized in that the supplementary layer (12) is of the same nature as the active layer.

8. Laser minicavity according to any one of the claims 1 to 7, characterized in that the substrate (2) and the epitaxied layers (4, 12, 14) are mixed metal oxides and in that the laser activating ions are ions of rare earths and/or transition metals.

9. Laser minicavity according to any one of the claims 1 to 8, characterized in that the substrate (2) is a substrate chosen from among Y₃Al₅O₁₂; Gd₃Ga₅O₁₂; Gd₃Ga₅O₁₂ with part of the gallium substituted by scandium or by magnesium or zirconium; LaMgAl₁₁O₁₉; Y₂SiO₅; YAl₃(BO₃)₄.

10. Laser minicavity according to claim 9, characterized in that the supplementary layer (12) has the same composition as the substrate.

11. Laser minicavity according to claim 1, characterized in that the laser emitter comprises an undoped Y₃Al₅O₁₂ substrate, an active Y₃Al₅O₁₂ layer doped with neodymium ions also serving as a guide layer and an undoped, supplementary Y₃Al₅O₁₂ layer.

12. Process for the production of the laser minicavity according to claim 1, characterized in that it comprises:
a) liquid phase epitaxy of the monocrystalline layers on the substrate, with the protective layer last,
b) cutting in the assembly obtained in a) a parallelepiped, whose cutting planes (6, 7) are perpendicular to the layers and define the lateral faces and
c) polishing said lateral faces.

13. Process according to claim 12, characterized in that the surface of the epitaxied layer which is to receive the protective layer is polished.

14. Process according to claim 12 or 13, characterized in that dielectric deposits (9, 10) are produced on said lateral faces in order to constitute semireflecting mirrors.

15. Optically pumped crystal minilaser, characterized in that it comprises a laser minicavity (11a) according to any one of the claims 1 to 11 and optical pumping means (16) for the emitter (1b).

16. Minilaser according to claim 15, characterized in that the pumping means comprise at least one laser diode (16).

17. Minilaser according to claim 15 or 16, characterized in that the diode is joined to one of its lateral faces (6) at the active layer (4).
